# EUROPEAN PATENT APPLICATION

(11) **EP 2 469 247 A1**
(43) Date of publication of application: **27.06.2012**
(21) Application number: 11194366.8
(22) Date of filing: 19.12.2011
(51) Int. Cl.: G01G 19/02

(54) **Vehicle Weighing Device Having Wireless Load Cell Device**

(30) Priority: 23.12.2010 GB 201021917
(71) Applicant: Flintec UK Limited, Cardiff, South Wales CF3 2PY (GB)
(72) Inventor: Brown, Christopher Stuart, Cardiff, CF14 1ED (GB)
(74) Representative: Hocking, Adrian Niall

(57) **Abstract**

A vehicle weighing device (54) comprising a weigh pad (56) adapted to receive at least one wheel (57) of a vehicle, a low-power consumption wireless load cell device (10) on the weigh pad (56), a remote interrogation device (32) which is wirelessly communicable with the load cell device (10). The load cell device (10) includes a local non-mains power supply, preferably being a battery (24), a load cell (16) energisable by the onboard power supply (24), and a wireless communication element (18). The load cell (16) includes a strain gauge (20) whereby a ratio of strain gauge resistances is determined by the time measurement of capacitor discharge thus minimising power consumption, and an activator (32a) which energises the strain gauge (20) via the non-mains power supply (24). The remote interrogation device (32) also includes a receiver (33) which receives data outputted by the strain gauge (20) via the wireless communication element (18).

## Description

The present invention relates to a vehicle weighing device using a low-power consumption wireless load cell device, and to an overhead conveyor using such a low-power consumption wireless load cell device.

It is known to use load cells to determine loads and thus weights of objects. However, a traditional load cell utilising a full-bridge configuration strain gauge draws, in relative terms, a reasonable amount of power. Although a battery or battery pack can be utilised, this would typically be drained relatively quickly and as such often it would be impractical to utilise the load cell as a remote unwired or standalone device.

A further difficulty hampering the unwired or standalone usage of a load cell is data transmission. An onboard transmitter again requires a reasonable amount of power, which further exacerbates the problems identified above.

The present invention seeks to provide a solution to these problems, whereby applications suited to the use of a wireless load cell become possible.

According to a first aspect of the invention, there is provided a vehicle weighing device comprising a weigh pad adapted to receive at least one wheel of a vehicle, a low-power consumption wireless load cell device on the weigh pad, a remote interrogation device which is wirelessly communicable with the load cell device, the load cell device including a local non-mains power supply, a load cell energisable by the onboard power supply, and a wireless communication element, the load cell including a strain gauge whereby a ratio of strain gauge resistances is determined by the time measurement of capacitor discharge thus minimising power consumption, and an activator which energises the strain gauge via the non-mains power supply, the remote interrogation device including a receiver which receives data outputted by the strain gauge via the wireless communication element.

Preferable and/or optional features of the first aspect of the invention are set forth in claims 2 to 19, inclusive.

According to a second aspect of the invention, there is provided a conveyor comprising a conveyor track, a plurality of holders movable on the conveyor track, drive means for moving the holders on the track, at least one low-power consumption wireless load cell device provided at least in part at a respective holder for measuring a load imparted to the holder, a remote interrogation device which is wirelessly communicable with the load cell device, the load cell device including a local onboard non-mains power supply, a load cell energisable by the non-mains power supply, and a wireless communication element, the load cell including a strain gauge whereby a ratio of strain gauge resistances is determined by the time measurement of capacitor discharge thus minimising power consumption from the non-mains power supply, an activator which energises the load cell device via the non-mains power supply, and the remote interrogation device including a receiver which receives data outputted by the strain gauge via the wireless communication element, the remote interrogation device being spaced from the holder whereby the strain gauge is activatable via the non-mains power supply and receives load data as the said holder passes following which the strain gauge is deactivated.

Preferably, the overhead conveyor is an overhead poultry conveyor.

The invention will now be more particularly described, by way of example only, with reference to the accompanying drawings, in which :
Figure 1 is a diagrammatic view of a first embodiment of a low-power consumption wireless load cell device;
Figure 2 is a diagrammatic view of a second embodiment of a low-power consumption wireless load cell device;
Figure 3 is a diagrammatic perspective view of one embodiment of an overhead conveyor incorporating at least one of the load cell devices of the first or second embodiments, and in accordance with the second aspect of the invention; and
Figure 4 is a diagrammatic side elevational view of one embodiment of a vehicle weighing device, again incorporating at least one of the load cell devices of the first or second embodiments, in accordance with the first aspect of the invention, and shown with a vehicle wheel thereon.

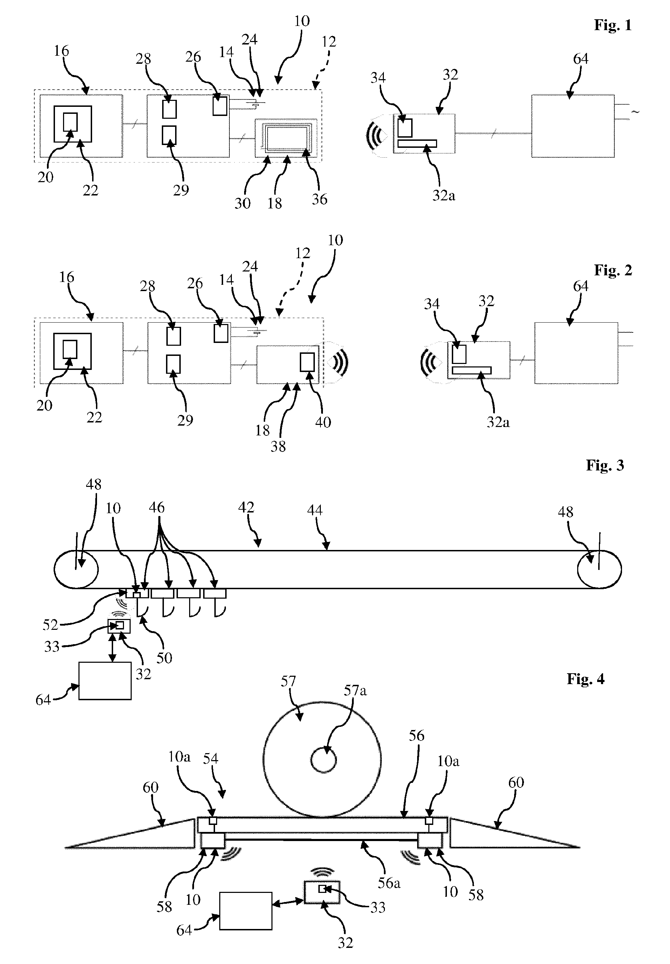

Referring firstly to Figure 1 of the drawings, there is shown a first embodiment of a low-power consumption wireless load cell device 10 which comprises a rigid support element 12 forming a base or housing of the device 10, an onboard non-mains powered and non-mains connected independent power supply 14 located on the support element 12, a load cell 16 also on the support element 12 and powerable by the onboard power supply 14, and a wireless data communication element 18.

The load cell 16 utilises a strain gauge 20 forming part of a strain gauge circuit 22, preferably in this case being a half-bridge or multiple half-bridge arrangement. A ratio of resistors in the strain gauge circuit 22 is ascribed to a time interval measurement, not to a voltage difference as in a Wheatstone or full bridge strain gauge. The resistors together with a capacitor act as low-pass filters. The capacitor, once charged to the supply voltage, is discharged through the resistors. The discharge time to trigger level, which may be selectable, is precisely measured by a time to digital convertor. This reduces the current draw utilised by the strain gauge 20 and the converter to a battery-manageable micro-amp range.

A potential difficulty associated with an onboard or carried isolated or standalone power supply, for example, being a battery, is longevity. The load cell device 10 may not have any means for connection to a mains power supply to allow for recharging of the battery, and furthermore, the load cell device 10 may well not be conveniently accessible to replace a discharged battery.

Therefore, a preferred option is to utilise a rechargeable battery 24 which is onboard the support element 12 and which utilises energy harvesting means 26, also carried by the support element 12, for converting ambient vibration into electrical energy storable by the rechargeable battery. Beneficially, this can be accommodated by the energy harvesting means 26 utilising a micro or small-scale piezoelectric generator. In this way, the rechargeable battery 24 is trickle charged if necessary when the support element 12 is in motion. Since the battery 24 is typically only utilised when the wireless data communication element 18 is energised to provide load cell 16 energisation and data recordal and interrogation or for occasional time- or load-triggered measurements, very little power is required over a sustained period, and consequently the battery 24 should last for the life of the load cell device 10.

The wireless data communication element 18 includes a data storage medium 28, for example, on an integrated circuit or as a separate memory element. Preferably, the data storage medium 28 is readable and writable, and beneficially may be a multi-programmable EEPROM or flash memory device. A timer element 29 forming at least part of an activator, may be included and integrated. The timer element 29 initiates periodic energisation of the strain gauge 20 via the non-mains power supply 24, whereby the strain gauge 20 is periodically activated to output a load reading to the data storage medium 28 and/or directly to the wireless communication element 18.

Advantageously, in the present embodiment, the wireless data communication element 18 includes a radio frequency identification element, also known as an RFID element 30. In the present invention, the RFID element 30 is a passive element being wirelessly powerable and interrogatable by a remote interrogation device 32, such as an RFID reader or interrogator having a receiver or transceiver 33. To this end, therefore, the passive RFID element 30 includes a controller 34 which is wirelessly energisable by the interrogation device 32. The controller 34 is utilised for waking the load cell device 10 once wireless interrogation by the remote interrogation device 32 is detected. In its woken state, the strain gauge 20 is energised by the onboard power supply 14 to read and output a load signal for recordal by the data storage medium 28 of the RFID element 30. The remote interrogation device 32 interrogates the data storage medium 28 to wirelessly retrieve the data via its receiver or transceiver 33.

As an alternative, the controller 34 may simply read a stored measurement or measurements which may be, for example, time-triggered by timer element 29 and thus previously stored ready for data transfer to the interrogation device.

Power for reading the data storage medium 28 is preferably generated via the interrogation device 32 once the strain gauge 20 data has been recorded, and preferably not by the onboard power supply 14 thereby minimising onboard power consumption. When the passive RFID element 30 is in the vicinity of an antenna coil in the interrogation device 32, radio-frequency energy is inductively coupled from the interrogation device 32 to the antenna coil 36 of the RFID element 30, powering the wireless data communication element 18 and enabling data transfer to the interrogation device 32

Referring to Figure 2, there is shown a second embodiment of a low-power consumption wireless load cell device 10. Like references refer to similar parts, and therefore further detailed description is omitted.

As in the first embodiment, the low-power consumption wireless load cell device 10 comprises a rigid support element 12, an onboard independent power supply 14 located on the support element 12, a load cell 16 also on the support element 12 and powerable by the onboard power supply 14, and a wireless data communication element 18. Preferably, as with the first embodiment, the device 10 is an integrated unitary module.

The wireless data communication element 18 includes an RFID element, but in this case it is an active RFID element 38 including a dedicated transmitter 40, for example, a radio frequency transmitter.

The transmitter 40, controllable by the controller 34 and powerable by the battery 24 of the onboard power supply 14, allows for wireless transmission to the remote interrogation device 32, once the interrogation device 32 is detected. This would provide for improved interrogation range and differs from the passive RFID element 30 of the first embodiment in that it can initiate communication and actively communicate with the interrogation device 32.

By providing the electronic RFID element 30, 38 with only a small amount of data relating to a single load measurement, interrogation of potentially rapidly moving parts can be undertaken very quickly by a relatively low powered interrogation device 32, since transmission time of the small amount of data is extremely low.

Additionally or alternatively, the wireless data communication element may be or include a more standard onboard powered transmitter. This may or may not be RFID related, dependent on necessity. It may also be convenient to include the above described RFID communication system as well as a more standard wireless transmitter/receiver system, for example, to provide redundancy in more harsh environments.

The first and second embodiments described above can be conveniently implemented into weigh-in-motion systems and/or static weighing systems. The weigh system may be portable, for example, by law enforcement units, with the remote interrogation device being powerable from a vehicle in the event that a dedicated power supply was unavailable.

By way of example only, the load cell device 10 of the present invention can be utilised in an overhead conveyor 42, such as used in food processing and more particularly in meat, such as poultry, movement. The overhead conveyor 42 comprises a conveyor track 44, a plurality of holders 46 movable on the conveyor track 44, drive means 48 for moving the holders 46 on the track 44, and at least one of the low-power consumption wireless load cell devices 10 provided at least in part at a respective holder 46.

In the case of poultry movement, the holder 46 may include a hook or hanger 50, and the load cell device 10 would be provided along the shaft of the hook or hanger 50, or at a carriage 52 from which the hook or hanger 50 is suspended.

The interrogation device 32 can conveniently be located at a fixed position above or beside the track 44 and in close proximity to the passing carriages 52, hooks or hangers 50.

The RFID element 30, 38 in this case is or is part of an activator which is operable in conjunction with an interrogator 32a of the remote interrogation device 32. As the holder 46 having the load cell device 10 thereon comes into range of the interrogation device 32, it is woken and thus activatable via the RFID element 30, 38 as described above, a load measurement is taken and stored on the data storage medium 28, the interrogation device 32 then reads or receives the load measurement data. Once out of range, the load cell device 10 deenergises.

Due to the vibratory movement of the conveyor track 44, the onboard power supply 14 can be charged by the energy harvesting means 26, if utilised.

Furthermore, due to the strain gauge 20 utilising determination of a ratio of strain gauge resistances by time measurement of capacitor discharge, power consumption during the energisation period of the load cell device 10 is minimised.

By way of a further example, the load cell device 10 of the present invention can be utilised in a vehicle weighing device 54, and more particularly a truck weighing device. Such a device 54 may be incorporated as part of a weigh-in-motion system or a static weighing system.

The vehicle weighing device 54 includes a, preferably planar, weigh pad 56 which is supported by at least one, and more typically at least four, low-power consumption wireless load cell devices 10 as described above with reference to the first or second embodiments. The weigh pad 56 is adapted to receive at least one wheel 57 thereon, for example in the case of an aircraft front wheel and/or one side of a vehicle, and more preferably at least one entire axle 57a with one or more wheels 57 at each end. Preferably, there is a said load cell device 10 at or adj acent to each corner of the weigh pad 56. Further said load cell devices 10 may be provided partway along one or more edge portions of weigh pad 56, and/or spaced in towards the centre.

In the case of utilising a plurality of load cells 16, they may be structurally interconnected by a strut or other elongate rigid connector 56a to limit respective independent movement.

Preferably, each load cell device 10 includes a ground-engagement element 58, typically in the form of a movable foot plate or cup to accommodate irregularities in the supporting terrain.

With the weigh pad 56 supported by the or each load cell device 10, the interrogation device 32 can be placed closely in the vicinity of the RFID element 30, 38 to receive a reading, or further away of a standard transmitter is incorporated as mentioned above. An activator 10a in this case is in communication with the weigh pad 56 to receive an input therefrom, whereby the wireless load cell device 10 is woken and thus activatable by the weigh pad 56 receiving a load thereon.

To enable a vehicle to mount the weigh pad 56, one or more ramp elements 60 may be provided. Each said ramp element 60 may be integrally formed as one-piece with the weight pad. However, more preferably, a said ramp element 60 is pivotably mounted to a leading edge and to a trailing edge of the weigh pad 56.

It is thus possible to provide a vehicle weigh device which may be mobile, and which for example can be stored and carried in a vehicle of a Government agency, such as the traffic police. Stop and check procedures can thus be performed at almost any safe location, with the data read by the interrogation device 32 being uploadable in the field for review to a portable computer 64, such as a laptop.

Due to the use of the onboard power supply 14 and the energy harvesting means 26, a dedicated plug-in power supply for the load cell device 10 may not be required. Furthermore, the interrogation device 32 can be powered by the portable computer 64 or via a battery of either vehicle.

In the above examples, and as mentioned above, although an RFID element and associated interrogation device is preferable due its robustness, longevity and low power consumption, any other suitable wireless data communication element can be considered for the load cell device. In this case, a suitable local transmitter, for example powered by a more powerful battery and a suitable remote receiver would be utilised. By way of example, devices utilising the ZigBee or Bluetooth RTM wireless data transmission protocol can be considered.

Furthermore, although the energy harvesting means may be vibrational-based, the energy harvesting means may also take other forms, such as solar being one or more photoelectric cells, wind being a wind powered turbine, thermal and/or geothermal being a geothermal heat exchanger to generate a current via a differential temperature gradient, as examples.

The activators described above may be utilised independently as necessity dictates, or may be utilised in combination with each other again dependent on requirements.

The embodiments described above are provided by way of examples only, and various other modifications will be apparent to persons skilled in the art without departing from the scope of the appended claims.

## Claims

1. A vehicle weighing device (54) comprising a weigh pad (56) adapted to receive at least one wheel (57) of a vehicle, a low-power consumption wireless load cell device (10) on the weigh pad (56), a remote interrogation device (32) which is wirelessly communicable with the load cell device (10), the load cell device (10) including a local non-mains power supply (24), a load cell (16) energisable by the onboard power supply (24), and a wireless communication element (18), the load cell (16) including a strain gauge (20) whereby a ratio of strain gauge (20) resistances is determined by the time measurement of capacitor discharge thus minimising power consumption, and an activator (10a; 29; 32a) which energises the strain gauge (20) via the non-mains power supply (24), the remote interrogation device (32) including a receiver (33) which receives data outputted by the strain gauge (20) via the wireless communication element (18).

2. A vehicle weighing device (54) as claimed in claim 1, wherein the activator (32a) is at least part of the remote interrogation device (32) whereby the wireless load cell device (10) is wirelessly activatable via the remote interrogation device (32).

3. A vehicle weighing device (54) as claimed in claim 2, wherein the wireless communication element (18) of the load cell device (10) is wirelessly powerable by the remote interrogation device (32) to minimise a current draw of the non-mains power supply (24).

4. A vehicle weighing device (54) as claimed in any one of claims 1 to 3, wherein the activator (10a) is in communication with the weigh pad (56) to receive an input therefrom, whereby the wireless load cell device (10) is activatable by the weigh pad (56) receiving a load.

5. A vehicle weighing device (54) as claimed in any one of clams 1 to 4, wherein the activator (29) is integrated as part of the wireless load cell device (10), the activator comprising a timer element (29) which periodically activates the load cell (16) to output a load reading to the wireless communication element (18).

6. A vehicle weighing device (54) as claimed in any one of claims 1 to 5, wherein a plurality of said low-power consumption wireless load cell devices (10) are engaged with the weigh pad (56) in spaced apart relationship.

7. A vehicle weighing device (54) as claimed in claim 6, wherein the plurality low-power consumption wireless load cell devices (10) are structurally interconnected to limit respective independent movement.

8. A vehicle weighing device (54) as claimed in any one of claims 1 to 7, wherein the or each low-power consumption wireless load cell device (10) includes a terrain-adaptable movable foot element (58), and supports the weigh pad (56) so as to be spaced from the ground.

9. A vehicle weighing device (54) as claimed in any one of claims 1 to 8, further comprising at least one ramp element (60) which is engagable with the weigh pad (56), so as to assist movement of a vehicle onto the weigh pad (56).

10. A vehicle weighing device (54) as claimed in any one of claims 1 to 9, which is portable.

11. A vehicle weighing device (54) as claimed in any one of claims 1 to 10, wherein the remote interrogation device (32) includes at least one output for outputting data to a peripheral data device (64).

12. A vehicle weighing device (54) as claimed in any one of claims 1 to 11, wherein the strain gauge (20) of the low-power consumption wireless load cell device (10) includes at least one half-bridge.

13. A vehicle weighing device (54) as claimed in any one of claims 1 to 12, wherein the non-mains power supply (24) includes an energy harvesting device (26) for recharging the said battery (24), the energy harvesting device (24) incorporating a vibratory piezoelectric element for providing trickle charging.

14. A vehicle weighing device (54) as claimed in any one of claims 1 to 13, wherein the wireless communication element (18) includes a wireless transmitter (40) for wirelessly transmitting data outputted by the strain gauge (20) to the remote interrogation device (32).

15. A vehicle weighing device (54) as claimed in any one of claims 1 to 14, wherein the wireless communication element (18) includes a radio-frequency identification element (30; 38), and the remote interrogation device (32) includes a remote radio-frequency interrogator (32a) by which the radio-frequency identification element (30; 38) is activatable to receive data outputted by the strain gauge (20).
